# EUROPEAN PATENT SPECIFICATION

(11) **EP 2 887 703 B1**
(45) Date of publication and mention of the grant of the patent: **09.12.2015**
(21) Application number: 14197808.0
(22) Date of filing: 12.12.2014
(51) Int. Cl.: H04W 4/00

(54) **Application protection in a mobile telecommunication device**
Anwendungsschutz in einer mobilen Telekommunikationsvorrichtung
Protection d'application dans un dispositif de télécommunication mobile

(30) Priority: 20.12.2013 US 201314137912
(43) Date of publication of application: 24.06.2015
(73) Proprietor: SAP SE, 69190 Walldorf (DE)
(72) Inventor: Kerber, Hannes, 69190 Walldorf (DE)
(74) Representative: Richardt Patentanwälte PartG mbB

(56) References cited:
- WO-A1-2012/094482
- US-A1- 2009 298 511
- US-A1- 2012 117 181

## Description

### BACKGROUND

To streamline application development for mobile telecommunication devices, so called templates are developed centrally, containing developments and configuration, in a separated environment and rolled out to subsidiaries, divisions, and the like to support processes among multiple mobile telecommunication device sin a common way.

However, development of templates is typically an expensive endeavor in terms of processing time, and processing resources. Further, departure from the templates may further increase expense in local development and maintenance effort and can result in data and process divergence across the broader environment of devices.

Documents US 2009 298 511, US 2012 117 181, and WO 2012 094482 represent relevant prior art.

### SUMMARY

Various embodiments provide a method of operating a first mobile telecommunications device, a mobile telecommunication device and a set of mobile telecommunication devices as described by the subject matter of the independent claims. Advantageous embodiments are described in the dependent claims.

In one aspect, the invention relates to a method of operating a first mobile telecommunications device, the first mobile telecommunication device comprising a processor, display device and memory, wherein the memory is configured to store at least one first application. The method comprises at the first mobile telecommunication device:
a) providing a configuration template for configuring one or more applications of a set of mobile telecommunication devices, the set of mobile telecommunication devices comprising the first mobile telecommunication device, the one or more application comprising the first application;
b) adapting the configuration template using at least one value of an operating condition parameter of the first mobile telecommunication device;
c) configuring the first application using the adapted configuration template;
d) receiving from a sender a change of at least one of the first application, the configuration template and the adapted configuration template;
e) classifying the received change into a first change and/or second and/or third change category, wherein the first, second and third change categories involve a change of at least the configuration template, of at least the adapted configuration template and of at least the first application respectively;
f) in case the received change is classified into the first change category sending a confirmation request of the change to an update authorization server that is in communication with the first mobile telecommunication device via a network, and receiving one of a confirmation and a rejection message of the change from the update authorization server;
g) in case the received change is classified into the second and/or third change categories
   o determining at least one component of the adapted configuration template and/or the first application that is affected by the change;
   o in response to determining that the component is not being currently changed and that the component is unlocked for a change that is classified into at least one of the second and third change categories, measuring a current value of the operating condition parameter;
h) applying the change in case of receiving the confirmation message or the received change matches the current value of the operating condition parameter.

The above features may provide a controlled and a secure method for operating mobile applications in mobile telecommunication devices. For example, only approved changes to mobile applications may be applied. The approval may be performed locally and/or remotely at the update authorization server.

The present method may prevent a departure from the configuration template which may further increase expense in local development and maintenance effort and can result in data and process divergence across multiple mobile telecommunication devices which may use a same configuration template.

As used herein, the term "configuration template" refers to a starting or existing pattern, framework, model, structure, outline, guide, etc. such as an electronic computer element, containing rules and/or conditions necessary to create, generate, modify, configure etc. applications. For example, the configuration template may comprise a computer file comprising a list of configuration parameters wherein at least part of the configuration parameters is as associated with default values.

Determining that the change matches the current value of the operating condition parameter may comprise determining that the change corresponds (e.g. does not contradict) the current value. In other terms, if the change to the component may result in a value that comprises the current value or may have a value that can be derived from the current value then the change matches the current value.

The adapting of the configuration template may comprise, for example, determining configuration parameters of the configuration template that correspond to the operating condition parameter. For example, a configuration parameter that corresponds to the operating condition parameter may comprise a configuration parameter that is the same as the operating condition parameter and/or a configuration parameter that is derived from the operating condition parameter and/or a configuration parameter whose value is dependent on the value of the operating condition parameter.

For example, each of the set of mobile telecommunication devices may install the first application. The set of mobile telecommunication devices may or may not have same properties.

The configuring of the first application may comprise adjusting one or more settings of the first application e.g. using configuration parameter values of the adapted configuration template.

The determined component may comprise a computer routine, object, thread, process, configuration variable, and so on.

The determining that the component is unlocked for a change that is classified into at least one of the second and third change categories may be performed using a local lock table that is stored in the first mobile telecommunication device. The local lock table indicates components that can or cannot be changed. In case, the component is locked for the change that is classified into at least one of the second and third change categories the change may not be applied.

According to one embodiment, the operating condition parameter comprises one of or a combination of at least part of a battery lifetime of the first mobile telecommunication device; a network bandwidth assigned to the first mobile telecommunication device; an operation mode of the first mobile telecommunication device; operational purpose of the first mobile telecommunication device; a spatial location of the first mobile telecommunication device. For example, the operating condition parameter may be all or a part of a spatial location of the first communication device. The operating condition parameter may be all or a part of a battery lifetime of the first mobile telecommunication device. The operating condition parameter may be all or a part of an operation mode of the first mobile telecommunication device. The operating condition parameter may be all or a part of a network bandwidth assigned to the first mobile telecommunication device. The operating condition parameter may be all or a part of an operational purpose of the first mobile telecommunication device. For example, the operating condition parameter may be some combination of all or a part of one or more of the enumerated operating condition parameters.

According to one embodiment, before sending the confirmation request, the method further comprises switching the first mobile telecommunication device into a secure communication mode. The switching comprises: determining that the sender is associated with a secure identification at the first mobile telecommunication device; establishing using a secure communication module of the mobile telecommunication device a secure communication link between the first mobile telecommunication device and the update authorization server over the network; performing the sending and receiving of step f) via the secure communication link using a communication protocol as defined by the secure communication module.

As a result, other devices that may be snooping may be unable to steal any information and to listen to the communications between the first mobile telecommunication device and the update authorization server.

For example, the secure communication link may comprise a broadband and/or modulated communication link. The secure communication link may be over a local area network via a Wi-Fi connection, over a wide area network via cellular communications network and the like. The communication protocol may for example be TCP/IP protocol. In another example, the communication protocol may be a secure protocol such as SSL.

For example, determining that the sender is associated with a secure identification comprises successfully authenticating the sender using the secure identification. The sender is successfully authenticated because the sender is associated with the secure identification. The secure identification may, for example, be an identifier that is assigned to the sender that allows the sender to perform the change at the first mobile telecommunication device. The sender may be a user of the first mobile telecommunication device, another telecommunication device that is connected to the first mobile telecommunication device.

This embodiment may further increase the security aspect of the present method by communicating data in a secure manner. According to one embodiment, the secure communication module comprises an encryption engine, wherein the method further comprises encrypting the confirmation request by the encryption engine and performing the sending after the confirmation request is encrypted. For example, the secure communication module may encrypt the confirmation message using an encryption key and send the confirmation request to the update authorization server that may have access to the encryption key in order to decrypt the confirmation request. The confirmation and/or rejection message may or may not be encrypted, as these messages may not contain significant data.

According to one embodiment, the change is further received at a subset of mobile telecommunication devices of the set of mobile telecommunication devices, wherein each of the set of telecommunication devices performs steps a)-e). The method further comprises before performing steps f)-h) ranking the subset of mobile telecommunication devices and the first mobile telecommunication device using a predefined ranking criterion; determining that the first mobile telecommunication device is ranked superior; wherein applying the change further comprises sending an update control signal to the subset of mobile telecommunication devices for applying the change at the subset of mobile telecommunication devices. That is when the change is not applied at the first mobile telecommunication device, there is no need to send a control signal to the subset of mobile telecommunication devices, since they are controlled to apply the change only after receiving the update control signal. In an alternative example, the first mobile telecommunication device may inform the subset of telecommunication devices that the change is rejected such the subset of mobile telecommunication devices may reject the change as well. For example, each of the set of telecommunication devices may perform the ranking of the subset of mobile telecommunication devices and the first mobile telecommunication device.

This embodiment may be advantageous in that it may provide a central control of the local changes at one mobile telecommunication device i.e. the first mobile telecommunication device. This is particularly advantageous for the set of mobile telecommunication devices having same properties e.g. located at the same region, run the same process, have same hardware and software properties or settings etc.

According to one embodiment, the ranking criterion comprises at least one of available processing resources at a mobile telecommunication device of the set of mobile telecommunication devices; a frequency of changes that have been applied at a mobile telecommunication device of the set of mobile telecommunication devices. For example, a mobile telecommunication device that has the highest frequency of changes may be ranked superior or first. The mobile telecommunication device that has the highest frequency of changes may be better configured to apply more changes than other mobile telecommunication devices having lower frequency of changes.

According to one embodiment, in case the change does not match the current value of the operating condition parameter, the method further comprises determining a future value of the operating condition parameter using the current value and historic values of the operating condition parameter; determining a frequency of change of the component; in response to a determination that the received change matches the future value and that the frequency of change is smaller than a maximum change frequency applying the change.

The future value may be determined for a future time period e.g. next month, year, week etc. that immediately follows the time at which the current value is determined. The future value may be an expected value of the operating condition parameter for the future time period.

The future value may be determined using a forecasting model that uses the behavior of the values of the operating condition parameter over time to predict the future value. For example, the behavior may indicate the values of the operating condition parameter over a given past year. The future value (e.g. for a next month: May) may, for example, be determined as being the value of the operating condition parameter in a period for which the future value may be determined (e.g. May).

In another example, the future value may be determined using historical data indicative of the past values. The future value may be selected from one of the historical values whose time period matches the time period for which the future value is determined.

This embodiment may be advantageous as it may further control changes to the first application based on future expectations. For example, if the component is frequently changed for adapting a parameter that indicates the language e.g. the frequency of change is higher than the maximum change frequency, then the future value (which may concern the spatial location of the first mobile telecommunication device) may not be accurate enough as it would have been in the case that the frequency of change is smaller. This is because the change of language may linearly depend on the change of the spatial location of the first mobile telecommunication device. The smaller the frequency of the change of the language the more stable values of the operating condition parameter (spatial location) are.

For example, the maximum change frequency comprises a frequency of changes of values of the operating condition parameter.

A change frequency refers to a number of changes per time interval e.g. 10 changes/day.

According to one embodiment, a change category of the first, second and third change categories relates to a change of at least one of configuration data, programming, and content of the at least one of, the configuration template the first application and the adapted configuration template respectively.

According to one embodiment, the measuring of the current value is performed in response to determining that the component is locked for a change that is classified into the first change category.

For example, the first change category may be centrally managed as it may concern the configuration template that is used by multiple telecommunication devices. Thus, the component may be unlocked only for changes of the first change category that originate from users having the highest e.g. administration priorities to perform changes. This embodiment may increase the secure aspect of the present method as it may prevent changes classified into the first change category and received from a user that is allowed to perform a change of the second and/or third category. In other terms, the user that is allowed to perform a change of the second and/or third category is not necessarily allowed to perform a change classified into the first change category, as he or she may not be an administrator having the right priviieges to perform a change classified into a first change category.

In another aspect, the invention relates to a computer program product comprising computer executable instructions to perform the method steps of the method of any one of the preceding embodiments.

In another aspect, the invention relates to a first mobile telecommunication device, the first mobile telecommunication device comprising a processor, display device and memory, wherein the memory is configured to store at least one first application. The first mobile telecommunication device is configured for:
a) providing a configuration template for configuring one or more applications of a set of mobile telecommunication devices, the set of mobile telecommunication devices comprising the first mobile telecommunication device, the one or more application comprising the first application;
b) adapting the configuration template using at least one value of an operating condition parameter of the first mobile telecommunication device;
c) configuring the first application using the adapted configuration template;
d) receiving from a sender a change of at least one of the first application, the configuration template and the adapted configuration template;
e) classifying the received change into a first change, second and third change category, wherein the first, second and third change categories involve a change of at least the configuration template, of at least the adapted configuration template and of at least the first application respectively;
f) in case the received change is classified into the first change category sending a confirmation request of the change to an update authorization server that is in communication with the first mobile telecommunication device via a network, and receiving one of a confirmation and a rejection message of the change from the update authorization server;
g) in case the received change is classified into the second and/or third change categories
   o determining at least one component of the adapted configuration template and/or the first application that is affected by the change;
   o in response to determining that the component is not being currently changed and that the component is unlocked for a change that is classified into at least one of the second and third change categories, measuring a current value of the operating condition parameter;
h) applying the change in case of receiving the confirmation message or the received change matches the current value of the operating condition parameter.

In another aspect the invention relates to a telecommunication system comprising a set of mobile telecommunication devices according to previous embodiments, wherein a first mobile telecommunication device of the set of mobile telecommunication device is configured for: before performing steps f)-h) ranking the set of mobile telecommunication devices using a predefined ranking criterion; determining that the first mobile telecommunication device is ranked superior; wherein applying the change further comprises sending an update control signal to the set of mobile telecommunication devices except the first mobile telecommunication device for applying the change at the set of mobile telecommunication devices.

In another aspect, the invention relates to a method comprising: maintaining a software system configured according to at least one of a global, regional, and local software system template; receiving a software system change including a change or addition to at least one of configuration data, programming, and content of the software system; prior to storing the received software system change: generating an update request including a representation of the software system change; transmitting, via a network, the update request to an update authority to receive permission to store the software system change; and receiving, via the network, a response to the update request; when the response to the update request includes an indication the software system change is not authorized, preventing the software system change from being stored; and when the response to the update request includes an indication the software system change is authorized, storing the software system change within a repository of the software system.

According to one embodiment, prior to storing the received software system change and prior to generating the update request, the method further includes: determining the software system change is not with regard to the at least one of the global, regional, and local software system template; and storing the software system change within the repository of the software system and exiting the method.

According to one embodiment, the software system is an enterprise management software system and the at least one global, regional, and local software system template is an enterprise management software system template that standardizes enterprise management software system instances deployed across a distributed enterprise.

According to one embodiment, the update request is transmitted in the form of a function call to a service of a central change management software system of the distributed enterprise.

According to one embodiment, the representation of the software system change included in the generated update request includes an identifier of each software system modification included in the received software system change and a value of each respective software system modification.

According to one embodiment, when the response to the update request includes the indication the software system change is not authorized, the response further includes an identifier of at least one software system modification that is not authorized.

According to one embodiment, when the response to the update request includes the indication the software system change is not authorized and also includes the identifier of the at least one software system modification that is not authorized, further presenting a message indicating the software system change is not authorized and data representative of the identifier of the at least one software system modification that is not authorized.

In another aspect, the invention relates to a non-transitory computer readable medium, with instructions stored thereon, which when executed by at least one processor of at least one computing device causes the at least one computing device to: maintain a representation of software system templates in a template repository, each of the software system templates including a set of software system elements and permissions associated therewith that restrict changes with regard to elements of the respective sets of software system elements; provide a change authorization service, accessible via a network, to receive software system change authorization requests, the change authorization service executable to: receive a software system change authorization request from a remote instance of a software system including at least one of the software system templates, the software system change request including a representation of a software system change desired to be made within the remote instance of the software system; determine whether the software system change is with regard to any software system elements of the software system templates; when the software system change is determined not to be with regard to any elements of the software system templates, generate and transmit, via the network to the remote instance of the software system, a message including data authorizing the software system change; when the software system change is determined to be with regard to at least one element of the software system templates, generate and transmit, via the network to the remote instance of the software system, a message including data indicating the software system change is not authorized.

In another aspect, the invention relates to a system comprising: at least one processor; at least one memory; at least one network interface; and an instruction set accessible in the memory and executable by the at least one processor to: maintain a representation of software system templates in a template repository, each of the software system templates including a set of software system elements and permissions associated therewith that restrict changes with regard to respective sets of software system elements; provide a change authorization service, accessible via the at least one network interface, to receive software system change authorization requests, the change authorization service executable to: receive a software system change authorization request from a remote instance of a software system including at least one of the software system templates, the software system update request including a representation of a software system change desired to be made within the remote instance of the software system; determine whether the software system change is with regard to any software system elements of the software system templates; when the software system change is determined not to be with regard to any software system elements of the software system templates, generate and transmit, via the at least one network interface device to the remote instance of the software system, a message including data authorizing the software system change; when the software system change is determined to be with regard to at least one software system element of the software system templates, generate and transmit, via the at least one network interface device to the remote instance of the software system, a message including data indicating the software system change is not authorized.

### BRIEF DESCRIPTION OF THE DRAWINGS

FIG. 1 is a logical block diagram of a system, according to an example embodiment.
FIG. 2 is a flow diagram of a method according to an example embodiment.
FIG. 3 is a block flow diagram of a method, according to an example embodiment.
FIG. 4 is a block flow diagram of a method, according to an example embodiment.
FIG. 5 is a block diagram of a computing device, according to an example embodiment.
FIG. 6 schematically depicts a telecommunication system according to the present disclosure.
FIG. 7 is a flowchart of a method of operating a mobile telecommunication device.

### DETAILED DESCRIPTION

Various embodiments herein are in the form of at least one of systems, methods, and software for software system template protection. With the help of software system template protection, developments, configurations, and information technology (IT) infrastructure setup can be protected and controlled in an efficient manner during the change process, while building and configuring applications and IT Infrastructure as well during the whole Application Lifecycle Management process. When changes are made in an instance of a software system deployment, prior to committing (i.e., storing) the changes, a change management service is called to determine whether such changes are allowed in view of one or more templates deployed to the instance of the software system and change restrictions associated therewith.

Such embodiments provide a technical solution to prevent undocumented and unapproved changes from being made to any of the mentioned elements. Technical entities, down to table entry level such as with regard to configuration settings, may be protected and cannot be changed in localization environment of an instance of a software system. The change management service provides a central control mechanism that is called whenever an actual change is to be made. These and other embodiments are illustrated and described herein.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

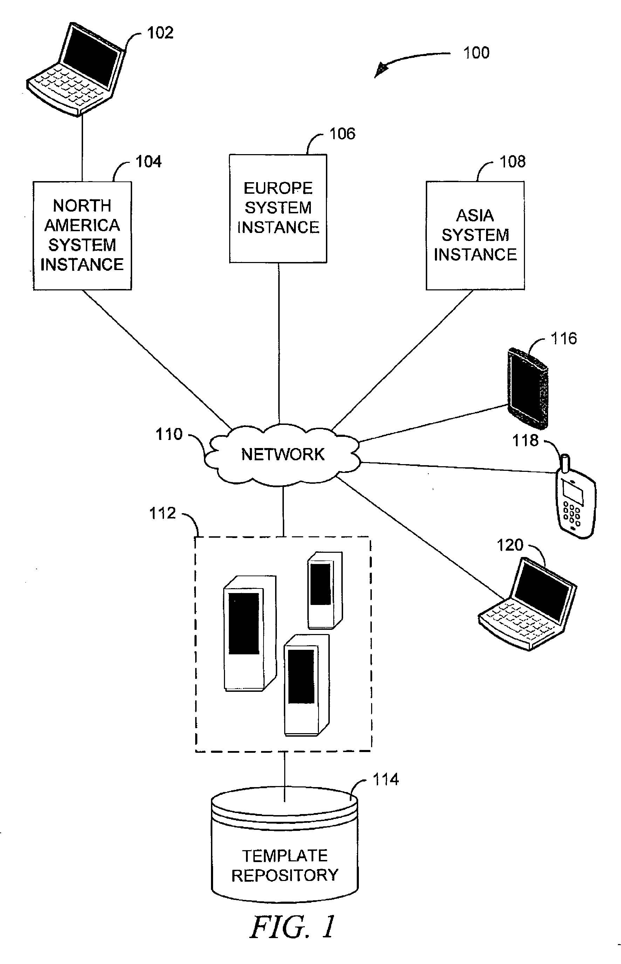

FIG. 1 is a logical block diagram of a system 100, according to an example embodiment. The system 100 is an example of a system within which software system template protection may be deployed. The system 100, in the example embodiment, includes a set of servers 112 that may include a central change management software system, such as Solution Manager available from SAP AG of Walldorf, Germany. The central change management software system provides functionality to restrict, based on software system templates, changes made in various software system instances 104, 106, 108 that the system 100 has deployed.

The software system instances are generally instances 104, 106, 108 of a management software system, such one or more of an enterprise resource planning (ERP), or other such system. Although three software system instances 104, 106, 108 are illustrated, other embodiments may include only a single instance while other embodiments may include two instances and more than three instances of the software system. The software system instances 104, 106, 108 are generally instances of the same software system, such as each of the instances is an instance of the same ERP system. However, each instance may be deployed for a different purpose or for servicing a data entity such as a localized unit that services a specific geographic region. As illustrated, the software system instances 104, 106, 108 are each deployed to service specific geographic regions (i.e., software system instance 104 is deployed to service North America, software system instance 106 is deployed to service Europe, and software system instance 108 is deployed to service Asia).

Each software system instance 104, 106, 108 may be deployed to unique computing devices, such as servers or virtual machines. However, in some embodiments, the set of servers 112 may host one or more, or even all, of the software system instances 104, 106, 108.

The management software system instances 104, 106, 108, when deployed on unique computing devices, may be connected to the set of servers 112 via a network 110. The network 110 may be one or both of a wired and wireless network providing connectivity to one or more of a local area network, a wide area network, the Internet, a virtual private network, a value added network, and other network types. Also connected to the network 110 may be various computing devices, such as tablets 116, smartphones 118, and personal computers 120. Such computing devices may provide client programs, apps, and browser-based clients to allow user interaction with the software system instances 104, 106, 108.

As each software system instance 104, 106, 108 is deployed to service different entities of a system and such entities may operate in different geographic regions, each software system instance 104, 106, 108, although an instance of the same software system, may need to be configured differently, include unique functionality, and the like due to legal requirements, local customs and best practices, industry standards, and the like. However, as each software system instance 104, 106, 108 is deployed as part of the larger system 100, maintaining consistency between each software system instance 104, 106, 108 is important to minimize development, deployment, and maintenance costs in terms of money, resources, and time. At the same time, each software system instance 104, 106, 108 must flex to meet the unique needs and requirements of its respective unit.

Software system templates are developed and implemented to preserve software system instance 104, 106, 108 with centrally developed forms of the software system, such as with regard to accounting practices, processes, correspondence, data formats, and software system instance 104, 106, 108 configurations. Software system templates include such items and can be deployed to the various software system instances 104, 106, 108. At the same time, a template repository 114 stores the templates and permission data associated therewith. When an update is to be performed with regard to an element of one of the software system instances 104, 106, 108, prior to committing (i.e., storing) the update, the respective software system instance, or a module or other programmatic element associated therewith, requests update permission from the central change management system that is present on the set of servers 112. The request may include one or more identifiers of software system elements that are being updated. In some embodiments, the request may further include one or more of an updated value of each element being updated, an identifier of the software system instance 104, 106, 108 being updated, an identifier of the user attempting to perform the update, and other such data. The central change management system then utilizes that data to determine whether the update is allowed based on templates and associated permission data stored in the template repository. When the update is with regard to software system elements that are not a part of a template, with regard to elements that are not update restricted, or with regard to elements that are update restricted but the requesting user has authority to make the update, the update may be allowed and a message is returned to the requestor indicating the allowability and the update will be committed.

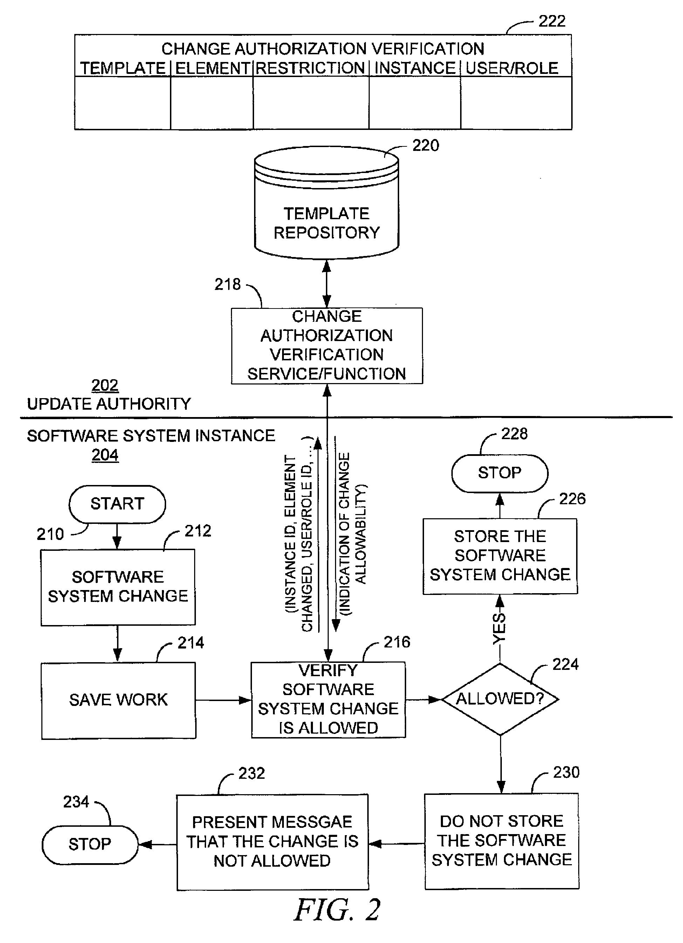

When the update is with regard to software system elements that are part of a template and update of one or more of the updated elements is not allowed at all or at least not allowed by the particular requesting user, a message is returned to the requestor denying permission to perform the update. The user may be presented with a message indicating the update is not allowed, and when the message includes data identifying the updated elements for which updates are not allowed, such data may also be presented. In some further embodiments, a user may be presented with an option to create a change request based on the attempted update. The change request, if created, will then be received by the central change management system and processed. FIG. 2 provides further detail with regard to the receiving and processing of software system updates.

FIG. 2 is a flow diagram of a method 200 according to an example embodiment. The method 200 is an example of a method that may be performed to verify a software system instance update is authorized prior to commitment of the change. The method 200, as illustrated includes a software system instance 204 and an update authority 202. The software system instance 204 is an example of a portion of one or more of the system instances 104, 106, 108 of FIG. 1. The update authority 202 is an example of a portion of a change management software system, such as may be deployed on the set of servers 112, also of FIG. 1.

The example method 200 starts 210 by receiving a software system change 212 and an attempt to save the work 214 of the software system change 212. The software system change 212 may be or include a modification or addition to program code, a change to a process, a change of a software system configuration, and virtually any other possible addition to, update of, or deletion of a portion of the software system instance 204.

When a developer, administrator, or other user to save the work 214 of the software system change 212, the software system instance 204 or a software tool being used to make the software system change 212, verifies the software system change 212 is allowed 216. To verify the software system change 212 is allowed 216, a call is made to a service or function 218 of the update authority 202. The service or function 218 may be called through a remote function call, a call of a web service, or other type of request or message that may be communicated over a network or otherwise between systems. The call may include various data elements representative of the software system change 212, such as an identifier of the software system instance 204 to which the software system change 212 is being attempted, an identifier of one or more elements of the software system instance 204 being changed, a user identifier or an identifier of a role of the user attempting to make the software system 204 change 212, and potential other data elements, depending on the particular embodiment.

The change authorization verification service or function 218, upon receipt of the call to verify the software system change is allowed 216, performs a determination of whether the software system change 212 is allowed. The determination, in some embodiments, is made based on data stored in a template repository 220. The template repository 220, as with the template repository 114 of FIG. 1, stores templates and permission data associated therewith. For example, the permissions data may be stored in a change authorization verification table 222 or one or more other tables including similar data, amongst other possible data.

In the change authorization verification table 222, which is stored in the template repository 220, various data elements are stored. As illustrated, the data stored in the change authorization verification table 222 includes rows of data, each row including data identifying a template, an element of the template (e.g., configuration setting identifiers, code elements or objects, user interface definitions, data fields, data types, and the like), and a type of restriction (e.g., locked, conditionally modifiable based on a user or role of a user making the change, no restriction, etc.). Each row of the change authorization verification table 222 may further include a software system instance identifier and a user identifier or role identifier to which the row of data applies. Thus, as is readily ascertainable, each template, element, software system instance, and user or user role may include zero to many rows of data in the change authorization verification table 222.

Thus, based on the data received in the call of the change authorization verification service or function 218, a call is made to retrieve one or more relevant rows of data from the change authorization verification table 222. Based on the retrieved rows of data, which may include a NULL set of rows, the determination of whether the software system change 212 is allowed. When a NULL set of rows are retrieved or if the rows retrieved reveal that there are no restrictions preventing the software system change 212, a message is generated and returned to the software system instance 204 indicating that the change is allowed and can be saved. However, if any rows provide data resulting in a determination that the change is not allowed, a message is generated and returned to the software system instance 204 indicating that the change is not allowed. The message returned when the change is not allowed may also include additional data identifying one or more changed software system instance 204 elements that are not allowed to be changed.

The message is received back in the software system instance 204 and a determination 224 is made there, based on the received message, whether the software system change 212 is allowed. When the change is allowed, the method stores 226 the change and the method stops 228. However, when the determination 224 is that the software system change 212 is not allowed, the change is not stored and typically, a message is presented 232 indicating the change is not allowed. The method then ends. However, in some embodiments, such as when the message returned by the change authorization verification service or function 218 includes data identifying the one or more changed software system instance 204 elements that are not allowed to be changed, the message presented 232 includes a representation of, or a selectable option to view, the offending software system instance 204 elements that cannot be changed.

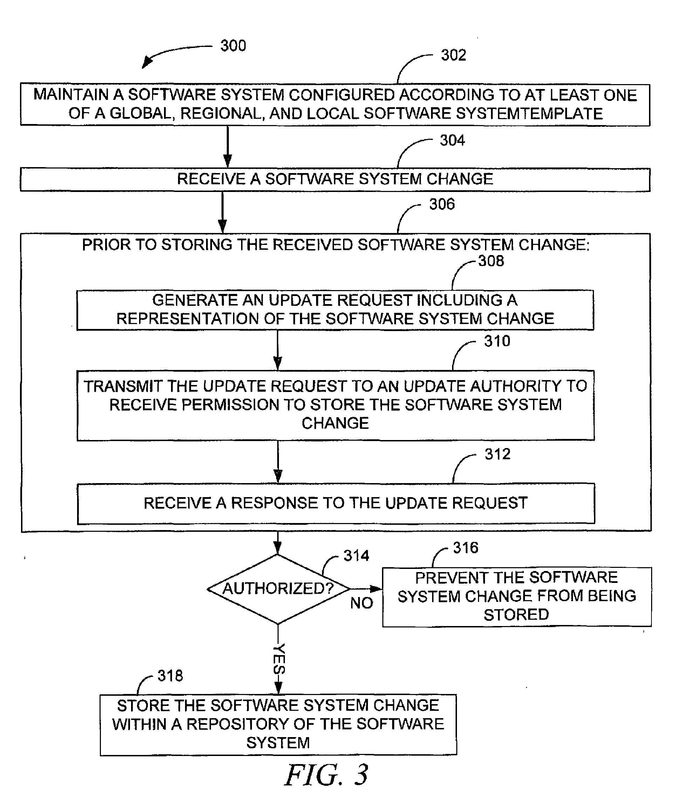

FIG. 3 is a block flow diagram of a method 300, according to an example embodiment. The method 300 is an example of a method that may be performed by a software system instance, such as one of the software system instances 104, 106, 108 of FIG. 1, the software system instance 204 of FIG. 2, or a software tool that can be used to make software system changes.

The method 300 includes maintaining 302 a software system configured according to at least one of a global, regional, and local software system template. As described earlier, a software system may be deployed in, or deployed to service, many different regions. Thus, a global software system template is a template that is deployed to software system instances regardless of locale where the system is located or a locale to be serviced by the system. Similarly, regional and local software system templates are templates developed for specific regions or locales, respectively.

The method 300 further includes receiving 304 a software system change including a change or addition to at least one of configuration data, programming, and content of the software system. Prior to storing 306 the received software system change, the method 300 generates 308 an update request including a representation of the software system change and transmits 310 the update request via a network to an update authority to receive permission to store the software system change. A message is then received 312 via the network in response to the update request. When the response to the update request includes an indication the software system change is not authorized, the method 300 prevents 316 the software system change from being stored. When the response to the update request includes an indication the software system change is authorized, the method 300 includes storing 318 the software system change within a repository of the software system.

In some embodiments, prior to storing 306 the received software system change and prior to generating 308 the update request, the method 300 further includes determining the software system change is not with regard to the at least one of the global, regional, and local software system template. In such instances, the software system change is stored within the repository of the software system and the method ends.

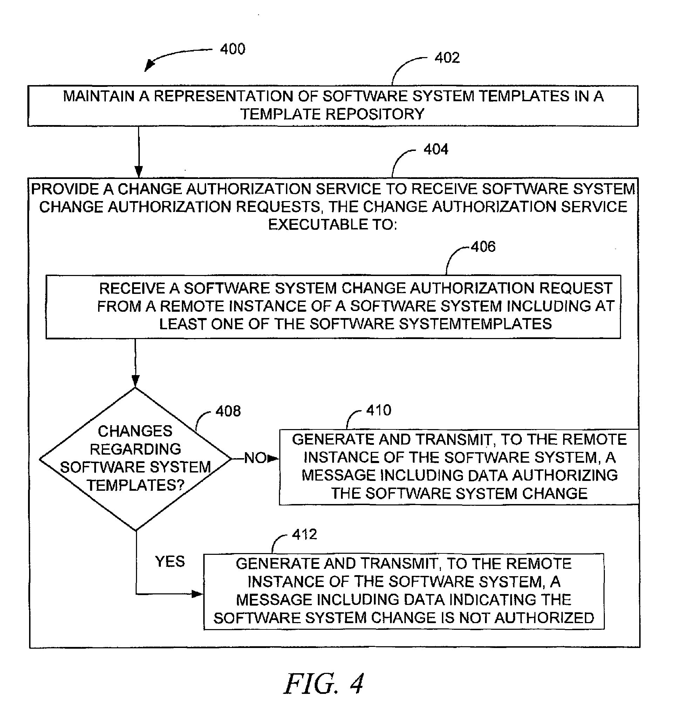

FIG. 4 is a block flow diagram of a method 400, according to an example embodiment. The method 400 is an example of a method that may be performed by an update authority, such as update authority 202 of FIG. 2.

The method 400 includes maintaining 402 a representation of software system templates in a template repository. In some embodiments, each of the software system templates includes a representation of a set of software system elements and permissions associated therewith that restrict changes with regard to elements of the respective sets of software system elements.

The method 400 further includes providing 404 a change authorization service, accessible via a network, such that the change authorization service may be called by remote software system instances to verify whether software system changes may be stored. For example, the change authorization service is executable to receive 406 a software system change authorization request from a remote instance of a software system that may include at least one of the software system templates. The software system change request will typically include a representation of a software system change desired to be made within the remote instance of the software system. The method 400 may then determine 408 whether the software system change is with regard to any software system elements of the software system templates. When the software system change is determined 408 not to be with regard to any elements of the software system templates, the method 400 generates and transmits 410, via the network to the remote instance of the software system, a message including data authorizing the software system change. However, when the software system change is determined 408 to be with regard to at least one element of the software system templates, the method 400 generates and transmits 412, via the network to the remote instance of the software system, a message including data indicating the software system change is not authorized.

In some embodiments of the method 400, the determining 408 of whether the software system change is with regard to any elements of the software system templates further includes determining, for each changed element of the software system change authorization request, whether a software system template restricts change to each respective software system element. In some such embodiments, when the software system change is determined to be with regard to at least one software system element the software system templates, the method 400 may generate and transmit 412 the message including data indicating the software system change is not authorized only when at least one software system element change of the software system change authorization request is restricted by a software system template.

In a further of such embodiments, the template repository includes data representative of a plurality of remote software system instances and data associating at least one software system template to each of the plurality of the remote software system instances. Additionally, the software system change authorization request may further include data identifying the remote instance of the software system. In another of such embodiments, the determining 408 of whether the software system change is with regard to any elements of the software system templates further includes identifying, based on the data identifying the remote instance of the software system included in the software system change authorization request, each software system template associated with the remote instance of the software system. Next, the method may determine whether the software system change is with regard to any elements of the identified software system templates associated with the remote instance of the software system.

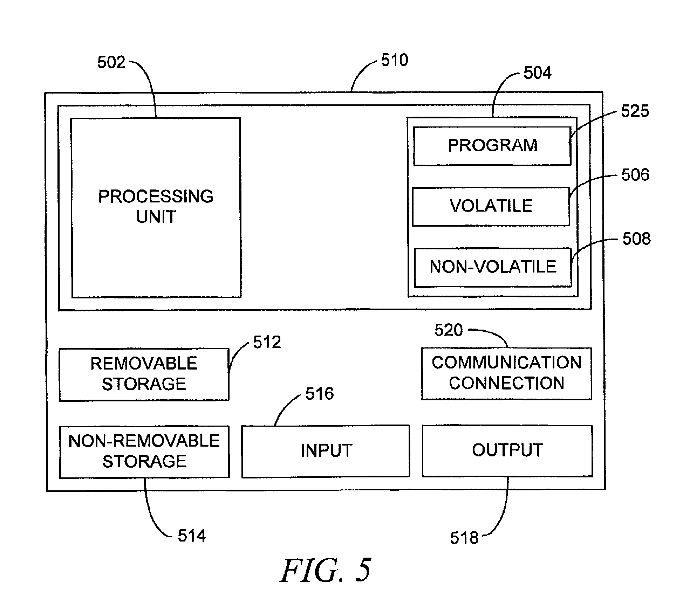

FIG. 5 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components. One example computing device in the form of a computer 510, may include a processing unit 502, memory 504, removable storage 512, and non-removable storage 514. Although the example computing device is illustrated and described as computer 510, the computing device may be in different forms in different embodiments. For example, the computing device may instead be a smartphone, a tablet, or other computing device including the same or similar elements as illustrated and described with regard to FIG. 5. Further, although the various data storage elements are illustrated as part of the computer 510, the storage may also or alternatively include cloud-based storage accessible via a network, such as the Internet.

Returning to the computer 510, memory 504 may include volatile memory 506 and non-volatile memory 508. Computer 510 may include - or have access to a computing environment that includes a variety of computer-readable media, such as volatile memory 506 and non-volatile memory 508, removable storage 512 and non-removable storage 514. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 510 may include or have access to a computing environment that includes input 516, output 518, and a communication connection 520. The input 516 may include one or more of a touchscreen, touchpad, mouse, keyboard, camera, and other input devices. The computer may operate in a networked environment using a communication connection 520 to connect to one or more remote computers, such as database servers, web servers, and other computing device. An example remote computer may include a personal computer (PC), server, router, network PC, a peer device or other common network node, or the like. The communication connection 520 may be a network interface device such as one or both of an Ethernet card and a wireless card or circuit that may be connected to a network. The network may include one or more of a Local Area Network (LAN), a Wide Area Network (WAN), the Internet, and other networks.

Computer-readable instructions stored on a computer-readable medium are executable by the processing unit 502 of the computer 510. A hard drive (magnetic disk or solid state), CD-ROM, and RAM are some examples of articles including a non-transitory computer-readable medium. For example, various computer programs or apps, such as one or more applications and modules implementing one or more of the methods illustrated and described herein or an app or application that executes on a mobile device or is accessible via a web browser, may be stored on a non-transitory computer-readable medium.

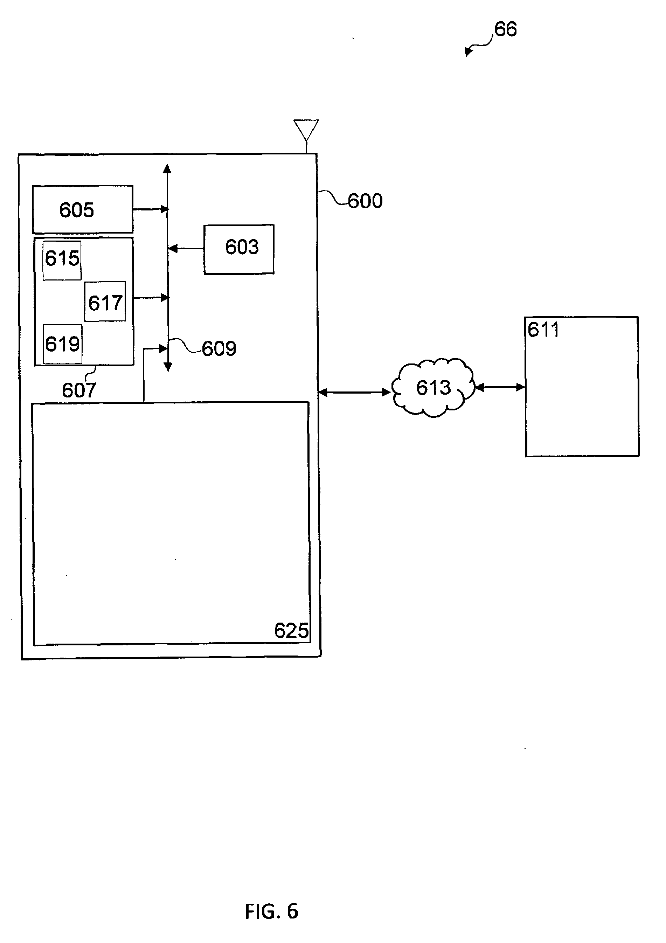

Fig. 6 shows an exemplary mobile telecommunication device 600 (such as 102, 116, 118 or 120) for a telecommunication system 66 (such as system 100 of Fig. 1). The telecommunication system 66 may comprise, for example, a cellular digital telecommunication system. The mobile telecommunication device 600 may comprise a processor 603, a transceiver 605, a memory 607 (e.g. a main memory) each capable of communicating with one or more components of the mobile telecommunication device 600. For example, all components are coupled to a bidirectional system bus 609. The mobile telecommunication device 600 further comprises a cache 617. Although, the cache 617 is shown as a portion of the memory 607, it may be separate from the memory 607 as a separate memory cache component (e.g. SRAM).

The processor 603 may be a microprocessor, a single core processor, a multicore processor or the like. The processor 603 may control the operation of the mobile telecommunication device 600. The transceiver 605 may be implemented as a transmitting and receiving component of the mobile telecommunication device 600. The mobile telecommunication device 600 may further comprise a display device 625 which displays characters and images and the like. For example, the display device 625 may be a touch sensitive display screen.

For example, the mobile telecommunication device 600 may be powered by a battery. The battery may be a rechargeable battery, which may be recharged using a power transfer means such as a connector.

The mobile telecommunication device 600 may be connected to an update authorization server 611 (e.g. server 112 FIG. 1) through a network 613 such as a mobile wireless cellular digital telecommunication network. The update authorization server 611 may be a computer system.

For example, the mobile telecommunication device 600 may be directly connected to the update authorization server 611 or via a base station (not shown) of the cellular-digital wireless telecommunication system. For that, the mobile telecommunication device 600 may for example establish a communication link over the network 613 with the update authorization server 811.

Using the transceiver 605, the mobile telecommunication device 600 may exchange data with the update authorization server 611 via the network 613. For example, the network 613 may comprise any number and combination of networks.

The mobile telecommunication device 600 may be assigned a predefined network bandwidth e.g. 300 MB per month. The assignment may be performed by a network operator of the telecommunication system 66.

Memory 607 is configured to store at least mobile application 615 that is executable on the processor 603. Memory 607 may further comprise a control unit 619.

The update authorization server 611 may have control access to one or more databases containing (e.g. template repository 114 of FIG. 1) configuration templates for configuring applications. For example, the update authorization server 611 may have access to configuration template 623. The configuration template 623 may be stored in the mobile telecommunication device 600 as well as other mobile telecommunication devices that contain applications e.g. mobile application 615 configurable by the configuration template 623. The configuration template 623 may for example be received at the mobile telecommunication device 600 (and/or other mobile telecommunication devices) from the update authorization server 611. In another example, the configuration template 623 may be generated at the mobile telecommunication device 600. In a further example, the configuration template 613 may be received by the mobile telecommunication device 600 from other data source than the update authorization source 611 e.g. received as input from a user of the mobile telecommunication device 600.

The mobile telecommunication device 600 may have an operating condition parameter. The operating condition parameter may be a predetermined condition parameter. For example, the mobile telecommunication device 600 may select the operating condition parameter from a list of operating condition parameters. The list of the operating condition parameters may be stored in the mobile telecommunication device.

The operating condition parameter may be a property of the mobile telecommunication device 600 and/or may be derived from a property of the mobile telecommunication device. The operating condition parameter may indicate past, current and/or future operating conditions of the mobile telecommunication device 600. The operating condition parameter may define a functioning status or condition describing the behavior and/or the function of the mobile telecommunication device 600. The mobile telecommunication device 600 may measure the operating condition parameter. For example, the mobile telecommunication device 600 may measure the operating condition parameter on a periodic basis (e.g. every day, hour etc.).

For example, the operating condition parameter may comprise a spatial location of the mobile telecommunication device 600. The mobile telecommunication device 600 may measure its spatial location using for example, a positioning technique such as GPS.

In another example, the operating condition parameter may comprise a battery lifetime or remaining battery lifetime of the mobile telecommunication device 600. The remaining battery lifetime may be monitored on a regular or periodic basis by the mobile telecommunication device 600.

In a further example, the mobile telecommunication device 600 may measure or monitor a network bandwidth assigned to the mobile telecommunication device 600. For example, the measured network bandwidth may be smaller or equal to the predefined network bandwidth (e.g. <= 300MB). The measurement of the network bandwidth may be performed every day to determine how much bandwidth remains to the mobile telecommunication device 600.

For example, the operating condition parameter may be some combination of all or a part of one or more of the enumerated operating condition parameters.

The mobile telecommunication device 600 may comprise at least one of a, smartphone, a PDA, a laptop, a computer, and the like.

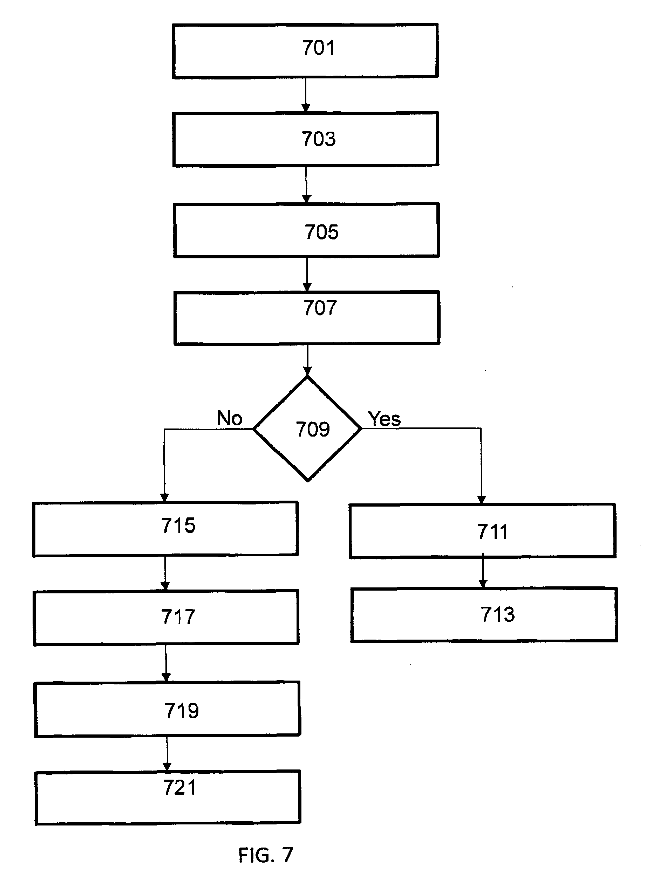

As shown in Fig. 7, the control unit 619 before using the configuration template 623 to configure the mobile application 615 may adapt in step 701 the configuration template 623 using at least one value of the operating condition parameter of the mobile telecommunication device 600 to obtain an adapted configuration template.

For example, the configuration template 623 may comprise an XML file, a data table and/or a computer file that lists or stores a set of configuration parameters and associated default values. The mobile application 615 may be configured using values of the set of configuration parameters.

For example, a configuration parameter of the set of configuration parameters may be a language configuration parameter that may depend on the location of the mobile telecommunication device 600. A default value of the language configuration parameter may, for example, be "English". However, if the mobile telecommunication device 600 is located in a region that is not anglophone, e.g. germaphone, the configuration template has to be adapted accordingly by, for example, changing the value of the language configuration parameter to become "german". In this case, the control unit 619 may determine the geographical location of the mobile telecommunication device 600 using for example GPS technique and determine that the language that is associated with of the current location (e.g. in a language-per-location file stored in the mobile telecommunication device 600), the control unit 619 may modify the XML file to replace the default value "english" with the value "german". The modified XML file may the adapted configuration template.

In another example, a configuration parameter of the set of configuration parameters may be an operational time of the mobile application (e.g. an average time for continuously running the mobile application). The operation time depends on the battery lifetime of the mobile telecommunication device 600. For example, a mobile application for performing phone calls may have an operational time of 5 hours that is the maximum time required for phoning with the battery lifetime. The operational time may have a default value that indicates the 5hours and associated battery lifetime. However, if the battery lifetime of the mobile telecommunication device 600 is not sufficient for maintaining a phone call for 5 hours, the operational time has to be adapted accordingly. For example, the control unit 619 may determine the battery lifetime of the mobile telecommunication device 600 and may use the determined battery lifetime for changing the default value of the operational time.

In a further example, a configuration parameter of the set of configuration parameters may be an operation mode parameter that may have a value indicative of the operation mode of the mobile telecommunication device 600. For example, the operation mode parameter may have an empty default value indicating that there are no constraints on the operation mode of the mobile telecommunication device 600. However, the control unit 619 may determine using, for example, the location of the mobile telecommunication device 600 that the mobile telecommunication device 600 is located in a non-trusted environment and thus may have operate run the mobile telecommunication device 600 in a secure operation mode. In this case, the value of the operation mode parameter may be adapted to become "secure" as an indication of the secure operation mode. In another example, the default value of the operation mode parameter may indicate a read access operation mode of the mobile application 615 in which the mobile application and/or the configuration template and/ the adapted configuration template cannot be changed. However, the control unit 619 may determined that the current logged-in user to the mobile telecommunication device 600 has the write permissions for the mobile application 615. In this case, the value of the operation mode parameter may be adapted or changed to indicate that a write access operation mode in which the mobile application and/or the configuration template and/ the adapted configuration template can be changed.

The adapted configuration template may comprise an indication of the mobile telecommunication device 600 and/or the mobile application 615. For example, the adapted configuration template may indicate a unique identification number of the mobile telecommunication device 600 and/or a version number of the mobile application 615.

The adapting of the configuration template may comprise adding additional configuration parameters. If, for example, a location configuration parameter that indicates the location of the mobile telecommunication device 600 is not in the configuration template, it may be added.

The control unit 619 may configure in step 703 the mobile application 615 using the adapted configuration template. For example, the mobile application may be configured to display messages in English and/or may be configured to encrypt data before communication of the data as part of the secure operation mode.

In step 705, the control unit 619 may receive from a sender a change of at least one of the mobile application 615, the configuration template and the adapted configuration template. For example, the change may concern an update of the mobile application 615 in order to add a new functionality to the mobile application 615. In another example, the change may concern the configuration template e.g. the set of configuration parameters may comprise a configuration parameter that indicates the version of a library from which the mobile application depends. The change, in this case, may for example be a new version number of the library that has to replace the old version number of the library. In another example, the change may concern one of the adapted values of the configuration parameters such as the language configuration parameter e.g. the change may indicate "French" instead of "german". The sender of the change may, for example, be a user of the mobile telecommunication device 600, computer, or computer program. For example, the change may be received upon interaction of the user with mobile telecommunication device 600 e.g. by editing the mobile application 615.

In step 707, the control unit 619 may classify the received change into a first change, second and third change category. The first, second and third change categories involve a change of at least the configuration template, of at least the adapted configuration template and of at least the mobile application respectively. For example, if a change is related to the mobile application then the change may be classified into a third change category.

If it is determined by the control unit 619, in step 709, that the received change is classified into the first change category, the control unit may send in step 711 a confirmation request of the change to the update authorization server 611, and may receive from the update authorization server 611, in step 713, either a confirmation or a rejection message of the change. The confirmation request may indicate the change and/or the component e.g. configuration parameter of the configuration template that is concerned with the change. For example, the update authorization server 611 may comprise a lock table that indicates configuration parameters that may be changed or not changed and may use the lock table to determine whether the received change can be applied or not applied by comparing the component e.g. configuration parameter that is concerned with the change with corresponding component or configuration parameter in the lock table to determine whether it can be changed or not. If the change can be applied the update authorization server 611 may send the confirmation message indicating that the change can be applied otherwise the update authorization server 611 may send the rejection message indicating that the change cannot be applied.

However, if it is determined by the control unit 619, in step 709, that the received change is classified into the second change and/or third change categories, then the control unit 619 may determine in step 715 at least one component of the adapted configuration template and/or the mobile application that is affected by the change. The component may for example be a computer routine of the mobile application or an instruction or a set of instructions of the adapted configuration template that indicate configuration parameter values. The control unit may have access to a local lock table (e.g. stored in the cache 617) that indicates components that can or cannot be changed.

The control unit 619 may determine in step 717 that the component is not being currently changed and that the component is unlocked for a change that is classified into at least one of the second and third change categories. That is, the component is currently not being modified or changed (e.g. edited) by another process. For example, a user of the mobile telecommunication device 600 may be editing the mobile application code while the change is received and being processed by the control unit 619. For example, the control unit 619 may determine (e.g. using the locale lock table) that the component is unlocked for a change that is classified into at least one of the second and third change categories but the component is locked for a change that is classified into the first change category. If the component is locked for a change that is classified into at least one of the second and third change categories then the change may not be applied.

In step 719, the control unit 619 may measure or determine a current value of the operating condition parameter. For example, the control unit 619 may determine that the current location (e.g. using GPS technique) of the mobile telecommunication device 600 has changed with respect to the last location with which the mobile application 615 has been configured (e.g. in step 703). In another example, the control unit 619 may determine that the mobile telecommunication device 600 operates in the write access operation mode, because the current user being logged-in the mobile telecommunication device 600 has the write access right to applications of the mobile telecommunication device 600 and in particular to the mobile application 615. For example, step 719 may be performed in response to the determining of step 717.

In step 721, the control unit 619 may apply the change in case of receiving the confirmation message or if the received change is dependent or matches the current value of the operating condition parameter. For example, if the received change indicates a value "french" for the language configuration parameter, then the control unit 619 may compare the language associated with a current location of the mobile telecommunication device 600 with the change. The current location may indicate a value of the language configuration parameter. If, for example, the control unit 619 determines that the current location of the mobile telecommunication device 600 is in a francophone land, the control unit 619 may determine that the change is dependent on (in that the change matches) the current value of the language configuration parameter being french. In this case, the change may be applied by the control unit 619. In another example, the control unit 619 may determine that a current user that is logged-in the mobile telecommunication device 600 has only read access right to the mobile application 615, which means that the current operation mode of the mobile telecommunication device is the read access operation mode. In this case, the control unit 615 may not apply the change. For example, the operation condition parameter may be a combination of the location of the mobile telecommunication device 600 and the operation mode of the mobile telecommunication device 600. The current value of the operating condition parameter may indicate that the current location of the mobile telecommunication device 600 and the operation mode (e.g. secure operation mode) of the mobile telecommunication device 600. If the change concerns the location configuration parameter and/or the operation mode configuration parameter, the control unit 619 may check if the change matches the current values of the location and/or the operation mode of the mobile telecommunication device 600. This may for example save resources compared to the case where individual parameters (e.g. no combination of individual parameters) are used for the operating condition parameter.

The method of Fig. 7 may be performed in each mobile telecommunication device of a set of mobile telecommunication devices that have received the change and that have the mobile application and the configuration template as described above. In one embodiment, the method steps 701-721 may only fully or completely be performed in a selected mobile telecommunication device of the set of mobile telecommunication devices. For example, the selected mobile telecommunication device may be ranked superior compared to the other mobile telecommunication devices of the set of mobile telecommunication devices. This may facilitate the communication between the set mobile telecommunication devices by for example using a common communication protocol for exchanging data.

The ranking may be based, for example, on available resources i.e. the selected mobile telecommunication device may have the highest amount of available resources among the other mobile telecommunication devices of the set of mobile telecommunication devices.

In another example, the set of mobile telecommunication devices may form a local area network, and may operate in a master-slave configuration in which the mobile telecommunication device 600 is a master node and each of the other mobile telecommunication devices is a slave node of the local area network. In this case, the ranking may be performed based on whether a mobile telecommunication device is a master or a slave node. The master node may be classified superior.

The ranking may be performed before performing steps 715-721 (or before steps 711-721). For example, steps 701-713 (or 701-707) may be executed in every mobile telecommunication device of the set of mobile telecommunication devices. The ranking may also be performed in every mobile telecommunication device of the set of mobile telecommunication devices. The selected mobile telecommunication device is a mobile telecommunication device of the set of mobile telecommunication devices that performed the ranking and finds out that it is ranked superior. Then the selected mobile telecommunication device may perform steps 715-720 and may control the other mobile telecommunication devices of the set of mobile telecommunication devices to apply the change if it is determined that the change is allowed as described above with respect to step 721. This may be advantageous, for example, in case the set of mobile telecommunication devices may have the same properties e.g. the set of mobile telecommunication devices have same spatial location.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A method of operating a first mobile telecommunications device (600), the first mobile telecommunication device comprising a processor (603) and memory (605), wherein the memory (607) is configured to store at least one first application (615), the method comprising at the first mobile telecommunication device (600):
- a) providing a configuration template for configuring one or more applications of a set of mobile telecommunication devices, the set of mobile telecommunication devices comprising the first mobile telecommunication device, the one or more application comprising the first application (615);
- b) adapting the configuration template using at least one value of an operating condition parameter of the first mobile telecommunication device (600);
- c) configuring the first application (615) using the adapted configuration template;
- d) receiving from a sender a change of at least one of the first application (615), the confguration template and the adapted configuration template;
- e) classifying the received change into a first change, second and/or third change category, wherein the first, second and third change categories involve a change of at least the configuration template, of at least the adapted configuration template and of at least the first application (615) respectively;
- f) in case the received change is classified into the first change category sending a confirmation request of the change to an update authorization server (611) that is in communication with the first mobile telecommunication device (600) via a network (613), and receiving one of a confirmation and a rejection message of the change from the update authorization server;
- g) in case the received change is classified into the second and/or third change categories
o determining at least one component of the adapted configuration template and/or the first application (615) that is affected by the change;
o in response to determining that the component is not being currently changed and that the component is unlocked for a change that is classified into at least one of the second and third change categories, measuring a current value of the operating condition parameter;
- h) applying the change in case of receiving the confirmation message or the received change matches the current value of the operating condition parameter.

2. The method of claim 1, wherein the operating condition parameter comprises one of or a combination of at least part of:
- a battery lifetime of the first mobile telecommunication device (600);
- a network bandwidth assigned to the first mobile telecommunication device (600);
- an operation mode of the first mobile telecommunication device (600);
- a spatial location of the first mobile telecommunication device (600).

3. The method of any of the preceding claims, wherein before sending the confirmation request, the method further comprises switching the first mobile telecommunication device into a secure communication mode, the switching comprising:
- determining that the sender is associated with a secure identification at the first mobile telecommunication device (600);
- establishing using a secure communication module of the first mobile telecommunication device a secure communication link between the first mobile telecommunication device and the update authorization server over the network;
- performing the sending and receiving of step f) via the secure communication link using a communication protocol as defined by the secure communication module.

4. The method of claim 3, wherein the secure communication module comprises an encryption engine, the method further comprising encrypting the confirmation request by the encryption engine, and performing the sending after the confirmation request is encrypted.

5. The method of any of the preceding claims, wherein the change is further received at a subset of mobile telecommunication devices of the set of mobile telecommunication devices, the method further comprising:
- before performing steps f)-h) ranking the subset of mobile telecommunication devices and the first mobile telecommunication device using a predefined ranking criterion;
- determining that the first mobile telecommunication device (600) is ranked superior;
wherein applying the change further comprises sending an update control signal to the subset of mobile telecommunication devices for applying the change at the subset of mobile telecommunication devices.

6. The method of any of claim 5, the ranking criterion comprises at least one of:
- available processing resources at a mobile telecommunication device of the set of mobile telecommunication devices;
- a frequency of changes that have been applied at a mobile telecommunication device of the set of mobile telecommunication devices.

7. The method of any of the preceding claims, wherein in case the change does not match the current value of the operating condition parameter, the method further comprises
- determining a future value of the operating condition parameter using the current value and historic values of the operating condition parameter;
- determining a frequency of change of the component;
- in response to a determination that the received change matches the future value and that the frequency of change is smaller than a maximum change frequency applying the change.

8. The method of any of the preceding claims, wherein a change category of the first, second and third change categories relates to a change of at least one of configuration data, programming, and content of the at least one of, the configuration template the first application and the adapted configuration template respectively.

9. The method of any of the preceding claims, wherein the measuring of the current value is performed in response to determining that the component is locked for a change that is classified into the first change category.

10. A computer program product comprising computer executable instructions to perform the method steps of the method of any one of the preceding claims.

11. A first mobile telecommunication device (600), the first mobile telecommunication device (600) comprising a processor (603) and memory (607), wherein the memory (607) is configured to store at least one first application (615), the first mobile telecommunication device (600) being configured for:
a) providing a configuration template for configuring one or more applications of a set of mobile telecommunication devices, the set of mobile telecommunication devices comprising the first mobile telecommunication device, the one or more application comprising the first application (615);
b) adapting the configuration template using at least one value of an operating condition parameter of the first mobile telecommunication device (600);
c) configuring the first application (615) using the adapted configuration template;
d) receiving from a sender a change of at least one of the first application (615), the configuration template and the adapted configuration template;
e) classifying the received change into a first change, second and/or third change category, wherein the first, second and third change categories involve a change of at least the configuration template, of at least the adapted configuration template and of at least the first application (615) respectively;
f) in case the received change is classified into the first change category sending a confirmation request of the change to an update authorization server (611) that is in communication with the first mobile telecommunication device via a network (613), and receiving one of a confirmation and a rejection message of the change from the update authorization server;
g) in case the received change is classified into the second and/or third change categories
o determining at least one component of the adapted configuration template and/or the first application (615) that is affected by the change;
o in response to determining that the component is not being currently changed and that the component is unlocked for a change that is classified into at least one of the second and third change categories, measuring a current value of the operating condition parameter;
h) applying the change in case of receiving the confirmation message or the received change matches the current value of the operating condition parameter.

12. A telecommunication system comprising a set of mobile telecommunication devices according to claim 11, wherein a first mobile telecommunication device (600) of the set of mobile telecommunication device is configured for:
- before performing steps f)-h) ranking the set of mobile telecommunication devices using a predefined ranking criterion;
- determining that the first mobile telecommunication device is ranked superior;
- wherein applying the change further comprises sending an update control signal to the set of mobile telecommunication devices except the first mobile telecommunication device for applying the change at the set of mobile telecommunication devices.

## Patentansprüche

1. Verfahren zum Betreiben einer ersten mobilen Telekommunikationsvorrichtung (600), wobei die erste mobile Telekommunikationsvorrichtung einen Prozessor (603) und einen Speicher (607) umfasst, wobei der Speicher (607) dafür ausgelegt ist, mindestens eine erste Anwendung (615) zu speichern, wobei das Verfahren umfasst, dass an der ersten mobilen Telekommunikationsvorrichtung (600)
- a) ein Konfigurations-Template zur Konfigurierung einer oder mehrerer Anwendungen eines Satzes von mobilen Telekommunikationsvorrichtungen bereitgestellt wird, wobei der Satz von mobilen Telekommunikationsvorrichtungen die erste mobile Telekommunikationsvorrichtung beinhaltet, wobei die eine oder die mehreren Anwendungen die erste Anwendung (615) beinhalten;
- b) das Konfigurations-Template unter Verwendung mindestens eines Wertes eines Betriebsbedingungsparameters der ersten mobilen Telekommunikationsvorrichtung (600) angepasst wird;
- c) die erste Anwendung (615) unter Verwendung des angepassten Konfigurations-Templates konfiguriert wird;
- d) von einem Sender eine Änderung an der ersten Anwendung (615) und/oder am Konfigurations-Template und/oder am angepassten Template empfangen wird;
- e) diese empfangene Änderung einer ersten Änderung, einer zweiten und/oder dritten Änderungskategorie zugeteilt wird, wobei die erste, die zweite und die dritte Änderungskategorie eine Änderung an zumindest dem Konfigurations-Template, an zumindest dem angepassten Konfigurations-Template bzw. an zumindest der ersten Anwendung (615) beinhalten;
- f) in einem Fall, wo die empfangene Änderung der ersten Änderungskategorie zugeteilt wird, eine Anfrage nach Bestätigung der Änderung an einen Update-Autorisierungsserver (611) gesendet wird, der mit der ersten mobilen Telekommunikationsvorrichtung (600) über ein Netz (613) kommuniziert, und eine Meldung über eine Bestätigung oder eine Ablehnung der Änderung vom Update-Autorisierungsserver empfangen wird;
- g) in einem Fall, wo die empfangene Änderung der zweiten und/oder der dritten Änderungskategorie zugeteilt wird,
o mindestens eine Komponente des angepassten Konfigurations-Templates und/oder der ersten Anwendung (615), die von der Änderung betroffen ist, bestimmt wird;
o als Reaktion auf die Bestimmung, dass die Komponente aktuell unverändert ist und dass die Komponente für eine Änderung, die der zweiten und/oder der dritten Änderungskategorie zugeteilt ist, freigegeben ist, ein aktueller Wert des Betriebsbedingungsparameters gemessen wird;
- h) die Änderung angewendet wird, falls eine Bestätigungsmeldung empfangen wird oder die empfangene Änderung zum aktuellen Wert des Betriebsbedingungsparameters passt.

2. Verfahren nach Anspruch 1, wobei der Betriebsbedingungsparameter einen der folgenden oder eine Kombination oder zumindest einen Teil der folgenden umfasst:
- eine Batterielebensdauer der ersten mobilen Telekommunikationsvorrichtung (600);
- eine Netzbandbreite, die der ersten mobilen Telekommunikationsvorrichtung (600) zugewiesen ist;
- einen Betriebsmodus der ersten mobilen Telekommunikationsvorrichtung (600);
- eine räumliche Lage der ersten mobilen Telekommunikationsvorrichtung (600).

3. Verfahren nach einem der vorangehenden Ansprüche, wobei das Verfahren vor dem Senden der Anforderung einer Bestätigung ferner das Umschalten der ersten mobilen Telekommunikationsvorrichtung in einen sicheren Kommunikationsmodus umfasst, wobei das Umschalten umfasst:
- Bestimmen, dass der Sender mit einer sicheren Kennung an der ersten mobilen Telekommunikationsvorrichtung (600) assoziiert ist;
- Einrichten einer sicheren Kommunikationsverbindung zwischen der ersten mobilen Telekommunikationsvorrichtung und dem Update-Autorisierungsserver über das Netz unter Verwendung eines sicheren Kommunikationsmoduls der ersten mobilen Telekommunikationsvorrichtung;
- Durchführen des Sendens und Empfangens von Schritt f) über die sichere Kommunikationsverbindung unter Verwendung eines Kommunikationsprotokolls wie vom sicheren Kommunikationsmodul definiert.

4. Verfahren nach Anspruch 3, wobei das sichere Kommunikationsmodul eine Verschlüsselungsmaschine umfasst, wobei das Verfahren ferner das Verschlüsseln einer Bestätigungsanfrage durch die Verschlüsselungsmaschine und nach dem Verschlüsseln der Bestätigungsanfrage das Durchführen des Sendens umfasst.

5. Verfahren nach einem der vorangehenden Ansprüche, wobei die Änderung ferner an einem Untersatz von mobilen Telekommunikationsvorrichtungen aus dem Satz von mobilen Telekommunikationsvorrichtungen empfangen wird, wobei das Verfahren ferner umfasst:
- Einstufen der Untergruppe von mobilen Telekommunikationsvorrichtungen und der ersten mobilen Telekommunikationsvorrichtung nach Rang unter Verwendung eines vordefinierten Rangfolgekriteriums, vor der Durchführung der Schritte f)-h);
- Bestimmen, dass die erste mobile Telekommunikationsvorrichtung (600) einen höheren Rang hat,
wobei die Anwendung der Änderung ferner das Senden eines Update-Steuersignals an den Untersatz von mobilen Telekommunikationsvorrichtungen umfasst, um die Änderung auf den Untersatz von mobilen Telekommunikationsvorrichtungen anzuwenden.

6. Verfahren nach Anspruch 5, wobei das Rangfolgekriterium mindestens eines der folgenden umfasst:
- verfügbare Verarbeitungsressourcen an einer mobilen Telekommunikationsvorrichtung des Satzes von mobilen Telekommunikationsvorrichtungen;
- eine Frequenz von Änderungen, die auf eine mobile Telekommunikationsvorrichtung aus dem Satz von mobilen Telekommunikationsvorrichtungen angewendet worden sind.

7. Verfahren nach einem der vorangehenden Ansprüche, wobei in einem Fall, wo die Änderung nicht zum aktuellen Wert des Betriebsbedingungsparameters passt, das Verfahren ferner umfasst:
- Bestimmen eines künftigen Wertes des Betriebsbedingungsparameters unter Verwendung des aktuellen Wertes und von in der Vergangenheit liegenden Werten des Betriebsbedingungsparameters;
- Bestimmen einer Änderungsfrequenz der Komponente;
- als Reaktion auf die Bestimmung, dass die empfangene Änderung zum künftigen Wert passt und dass die Änderungsfrequenz niedriger ist als eine maximale Änderungsfrequenz, Anwenden der Änderung.

8. Verfahren nach einem der vorangehenden Ansprüche, wobei eine Änderungskategorie der ersten, der zweiten und der dritten Änderungskategorie eine Änderung von Konfigurierungsdaten und/oder einer Programmierung und/oder eines Inhalts des Konfigurations-Templates der ersten Anwendung und/oder des angepassten Konfigurations-Templates betrifft.

9. Verfahren nach einem der vorangehenden Ansprüche, wobei das Messen des aktuellen Wertes als Reaktion auf eine Bestimmung durchgeführt wird, dass die Komponente für eine Änderung, die der ersten Änderungskategorie zugeordnet ist, gesperrt ist.

10. Computerpgrogrammprodukt, das computerausführbare Befehle umfasst, um die Verfahrensschritte des Verfahrens nach einem der vorangehenden Ansprüche durchzuführen.

11. Eine erste mobile Telekommunikationsvorrichtung (600), wobei die erste mobile Telekommunikationsvorrichtung (600) einen Prozessor (603) und einen Speicher (607) umfasst, wobei der Speicher (607) dafür ausgelegt ist, mindestens eine erste Anwendung (615) zu speichern, wobei die erste mobile Telekommunikationsvorrichtung (600) dafür ausgelegt ist,
a) ein Konfigurations-Template zur Konfigurierung einer oder mehrerer Anwendungen eines Satzes von mobilen Telekommunikationsvorrichtungen bereitzustellen, wobei der Satz von mobilen Telekommunikationsvorrichtungen die erste mobile Telekommunikationsvorrichtung beinhaltet, wobei die eine oder die mehreren Anwendungen die erste Anwendung (615) beinhalten;
b) das Konfigurations-Template unter Verwendung mindestens eines Wertes eines Betriebsbedingungsparameters der ersten mobilen Telekommunikationsvorrichtung (600) anzupassen;
c) die erste Anwendung (615) unter Verwendung des angepassten Konfigurations-Templates zu konfigurieren;
d) von einem Sender eine Änderung an der ersten Anwendung (615) und/oder am Konfigurations-Template und/oder am angepassten Template zu empfangen;
e) die empfangene Änderung einer ersten Änderung, einer zweiten und/oder dritten Änderungskategorie zuzuteilen, wobei die erste, die zweite und die dritte Änderungskategorie eine Änderung von zumindest dem Konfigurations-Template, von zumindest dem angepassten Konfigurations-Template bzw. von zumindest der ersten Anwendung (615) beinhalten;
f) in einem Fall, wo die empfangene Änderung der ersten Änderungskategorie zugeteilt wird, eine Anfrage nach Bestätigung der Änderung an einen Update-Autorisierungsserver (611), der mit der ersten mobilen Telekommunikationsvorrichtung über ein Netz (613) kommuniziert, zu senden und eine Meldung über eine Bestätigung oder eine Ablehnung der Änderung vom Update-Autorisierungsserver zu empfangen;
g) in einem Fall, wo die empfangene Änderung der zweiten und/oder der dritten Änderungskategorie zugeteilt wird,
o mindestens eine Komponente des angepassten Konfigurations-Templates und/oder der ersten Anwendung (615), die von der Änderung betroffen ist, zu bestimmen;
o als Reaktion auf die Bestimmung, dass die Komponente aktuell unverändert ist und dass die Komponente für eine Änderung freigegeben ist, die der zweiten und/oder der dritten Änderungskategorie zugeteilt ist, einen aktuellen Wert des Betriebsbedingungsparameters zu messen;
h) die Änderung anzuwenden, falls die Bestätigungsmeldung empfangen wird oder die empfangene Änderung zum aktuellen Wert des Betriebsbedingungsparameters passt.

12. Telekommunikationssystem, einen Satz von mobilen Telekommunikationsvorrichtungen nach Anspruch 11 umfassend, wobei eine erste Telekommunikationsvorrichtung (600) des Satzes von mobilen Telekommunikationsvorrichtungen dafür ausgelegt ist,
- den Satz von mobilen Telekommunikationsvorrichtungen unter Verwendung eines vordefinierten Rangfolgekriteriums in eine Rangfolge zu bringen, bevor die Schritte f)-h) durchgeführt werden;
- zu bestimmen, dass die erste mobile Telekommunikationsvorrichtung (600) einen höheren Rang hat,
- wobei die Anwendung der Änderung ferner das Senden eines Update-Steuersignals an den Untersatz von mobilen Telekommunikationsvorrichtungen außer der ersten mobilen Telekommunikationsvorrichtung umfasst, um die Änderung auf den Untersatz von mobilen Telekommunikationsvorrichtungen anzuwenden.

## Revendications

1. Procédé de fonctionnement d'un premier dispositif mobile de télécommunication (600), le premier dispositif mobile de télécommunication comprenant un processeur (603) et une mémoire (607), dans lequel la mémoire (607) est configurée pour stocker au moins une première application (615), le procédé comprenant, au niveau du premier dispositif mobile de télécommunication (600) :
-- a) la fourniture d'un modèle de configuration pour configurer une ou plusieurs applications d'un ensemble de dispositifs mobiles de télécommunication, l'ensemble de dispositifs mobiles de télécommunication comprenant le premier dispositif mobile de télécommunication, la ou les plusieurs applications comprenant la première application (615) ;
-- b) l'adaptation du modèle de configuration en utilisant au moins une valeur d'un paramètre de condition de fonctionnement du premier dispositif mobile de télécommunication (600) ;
-- c) la configuration de la première application (615) en utilisant le modèle de configuration adapté ;
-- d) la réception, en provenance d'un émetteur, d'une modification d'au moins un paramètre parmi la première application (615), le modèle de configuration et le modèle de configuration adapté ;
-- e) le classement de la modification reçue dans une première catégorie de modification, une seconde et/ou une troisième catégorie de modification, dans lequel les première, seconde et troisième catégories de modification impliquent une modification d'au moins le modèle de configuration, d'au moins le modèle de configuration adapté et d'au moins la première application (615), respectivement ;
-- f) dans le cas où la modification reçue est classée dans la première catégorie de modification, l'envoi d'une demande de confirmation de la modification à un serveur d'autorisation de mise à jour (611) qui est en communication avec le premier dispositif mobile de télécommunication (600) via un réseau (613), et la réception d'un message de confirmation ou de rejet de la modification en provenance du serveur d'autorisation de mise à jour ;
-- g) dans le cas où la modification reçue est classée dans les seconde et troisième catégories
o la détermination d'au moins un composant du modèle de configuration adapté et/ou de la première application (615) qui est affectée par la modification ;
o en réponse à la détermination que le composant n'est pas en cours de modification et que le composant n'est pas verrouillé pour une modification qui est classée dans au moins une des seconde et troisième catégories de modification, la mesure de la valeur en cours du paramètre de la condition du fonctionnement ;
-- h) l'application de la modification en cas de réception du message de confirmation, ou si la modification reçue est en accord avec la valeur en cours du paramètre de la condition du fonctionnement.

2. Procédé selon la revendication 1, dans lequel le paramètre de condition de fonctionnement comprend un paramètre ou une combinaison d'au moins une partie des paramètres parmi :
- une durée de vie de la batterie du premier dispositif mobile de télécommunication (600) ;
- une bande passante de réseau attribuée au premier dispositif mobile de télécommunication (600) ;
- un mode de fonctionnement du premier dispositif mobile de télécommunication (600) ;
- un emplacement géographique du premier dispositif mobile de télécommunication (600).

3. Procédé selon l'une quelconque des revendications précédentes, dans lequel, avant l'envoi de la demande de confirmation, le procédé comprend en outre le passage du premier dispositif mobile de télécommunication à un mode de communication sécurisé, le passage comprenant :
- la détermination du fait que l'émetteur est associé à une identification sécurisée au niveau du premier dispositif mobile de télécommunication (600) ;
- l'établissement, en utilisant un module de communication sécurisé du premier dispositif mobile de télécommunication, d'un lien de communication sécurisé entre le premier dispositif mobile de télécommunication et le serveur d'autorisation de mise à jour par le truchement du réseau ;
- la réalisation de l'envoi et de la réception de l'étape f) via le lien de communication sécurisé en utilisant un protocole de communication tel que défini par le module de communication sécurisé.

4. Procédé selon la revendication 3, dans lequel le module de communication sécurisé comprend un moteur d'encryptage, le procédé comprenant en outre un encryptage de la demande de confirmation par le moteur d'encryptage, et l'exécution de l'envoi après que la demande de confirmation soit encryptée.

5. Procédé selon l'une quelconque des revendications précédentes, dans lequel la modification est en outre reçue sur un sous-ensemble de dispositifs de télécommunication mobiles de l'ensemble des dispositifs de télécommunication mobiles, le procédé comprenant en outre :
-- avant l'exécution des étapes f) à h), le classement du sous-ensemble des dispositifs de télécommunication mobiles et du premier dispositif de télécommunication mobile en utilisant un critère de classement prédéfini ;
-- la détermination du fait que le premier dispositif de télécommunication mobile (600) est de rang supérieur ;
dans lequel l'application de la modification comprend en outre l'envoi d'un signal de contrôle de mise à jour vers le sous-ensemble de dispositifs de télécommunication mobiles pour l'application de la modification au sous-ensemble de dispositifs de télécommunication mobiles.

6. Procédé selon la revendication 5, le critère de classement comprend au moins un paramètre parmi :
-- des ressources de traitement disponibles sur un dispositif de télécommunication mobile de l'ensemble des dispositifs de télécommunication mobiles ;
-- une fréquence de modifications qui ont été appliquées à un dispositif de télécommunication mobile de l'ensemble des dispositifs de télécommunications mobiles.

7. Procédé selon l'une quelconque des revendications précédentes, dans lequel, dans le cas où la modification ne correspond pas avec la valeur en cours du paramètre de condition de fonctionnement, le procédé comprend en outre
-- la détermination d'une valeur future du paramètre de condition de fonctionnement en utilisant la valeur en cours et les valeurs de l'historique du paramètre de condition de fonctionnement ;
-- la détermination d'une fréquence de modifications du composant ;
-- en réponse à une détermination du fait que la modification reçue corresponde à la valeur future et que la fréquence de modification soit inférieure à une fréquence de modification maximale, l'application de la modification.

8. Procédé selon l'une quelconque des revendications précédentes, dans lequel une catégorie de modifications parmi les première, seconde et troisième catégories de modifications concerne une modification d'au moins un paramètre parmi les données de configuration, la programmation et le contenu d'au moins un paramètre parmi le modèle de configuration, la première application et le modèle de configuration adapté, respectivement.

9. Procédé selon l'une quelconque des revendications précédentes, dans lequel la mesure de la valeur en cours est réalisée en réponse à la détermination du fait que le composant est verrouillé pour une modification qui est classée dans la première catégorie de modifications.

10. Produit de programme d'ordinateur comprenant des instructions pouvant être exécutées par ordinateur pour effectuer les étapes de procédé du procédé selon l'une quelconque des revendications précédentes.

11. Premier dispositif de télécommunication mobile (600), le premier dispositif de télécommunication mobile (600) comprenant un processeur (603) et une mémoire (607), dans lequel la mémoire (607) est configurée pour stocker au moins une première application (615), le premier dispositif de télécommunication mobile (600) étant configuré pour :
a) fournir un modèle de configuration d'une ou de plusieurs applications d'un ensemble de dispositifs de télécommunication mobiles, l'ensemble de dispositifs de télécommunication mobiles comprenant le premier dispositif de télécommunication mobile, l'une ou les plusieurs applications comprenant la première application (615) ;
b) l'adaptation du modèle de configuration en utilisant au moins une valeur d'un paramètre de condition de fonctionnement du premier dispositif de télécommunication mobile (600) ;
c) la configuration de la première application (615) en utilisant le modèle de configuration adapté ;
d) la réception, à partir d'un émetteur, d'une modification d'au moins un paramètre parmi la première application (615), le modèle de configuration et le modèle de configuration adapté ;
e) le classement de la modification reçue dans une première, seconde et/ou troisième catégorie de modifications, où les première, seconde et troisième catégories de modifications impliquent une modification au moins du modèle de configuration, au moins du modèle de configuration adapté et d'au moins la première application (615), respectivement ;
f) dans le cas où la modification reçue est classée dans la première catégorie de modifications, l'envoi d'une demande de confirmation de la modification vers un serveur d'autorisation de mise à jour (611) qui est en communication avec le premier dispositif de télécommunication mobile via un réseau (613) et la réception d'un message parmi un message de confirmation et un message de rejet de la modification du serveur d'autorisation de mise à jour ;
g) dans le cas où la modification reçue est classée dans les seconde et/ou troisième catégories de modifications
o la détermination d'au moins un composant du modèle de configuration adapté et/ou de la première application (615) qui est affectée par la modification ;
o en réponse à la détermination que le composant n'a pas été modifié à ce moment et que le composant est déverrouillé pour une modification qui est classée dans au moins l'une des seconde ou troisième catégories de modifications, la mesure d'une valeur en cours du paramètre de condition de fonctionnement ;
h) l'application de la modification dans le cas de la réception du fait que le message de confirmation ou la modification reçue correspond avec la valeur en cours du paramètre de condition de fonctionnement.

12. Système de télécommunication comprenant un ensemble de dispositifs de télécommunication mobiles selon la revendication 11, dans lequel un premier dispositif de télécommunication mobile (600) de l'ensemble des dispositifs de télécommunication mobiles est configuré pour :
-- avant d'effectuer les étapes f) à h), classer l'ensemble des dispositifs de télécommunication mobiles en utilisant un critère de classement prédéfini ;
-- déterminer que le premier dispositif de télécommunication mobile est classé de rang supérieur ;
-- dans lequel l'application de la modification comprend en outre l'envoi d'un signal de contrôle de mise à jour vers l'ensemble des dispositifs de télécommunication mobiles à l'exception du premier dispositif de télécommunication mobile pour l'application de la modification sur l'ensemble des dispositifs de télécommunication mobiles.
